# EUROPEAN PATENT SPECIFICATION

(11) **EP 1 188 209 B1**
(45) Date of publication and mention of the grant of the patent: **26.12.2007**
(21) Application number: 00937437.2
(22) Date of filing: 23.05.2000
(51) Int. Cl.: H02G 15/064, H02G 15/103

(54) **CONTROL OF ELECTRIC FIELD AT DIRECT VOLTAGE**
STEUERUNG DES ELEKTRISCHEN FELDES BEI GLEICHSPANNUNG
COMMANDE DE CHAMP ELECTRIQUE EN TENSION CONTINUE

(30) Priority: 28.05.1999 SE 9901987
(43) Date of publication of application: 20.03.2002
(73) Proprietor: ABB AB, 721 83 Västerås (SE)
(72) Inventor: PALMQVIST, Lars, S-441 34 Alingsås (SE); SVAHN, Jörgen, S-411 29 Göteborg (SE)
(86) International application number: PCT/SE2000/001028
(87) International publication number: WO 2000/074191

(56) References cited:
- WO-A1-97/09762
- GB-A- 2 111 769
- US-A- 4 822 952

## Description

### TECHNICAL FIELD

The present invention relates to a device for controlling an electric field at, for example, a connection, a termination or a joint, of a high-voltage cable for dc voltage.

In conventional field control of dc voltage, only resistive field control is used. The electric potential between the live part and ground is distributed with the aid of a material with a suitable resistance. The disadvantage of this known field control is that, at rapid voltage variations, the resistive material does not have time to control the field, which leads to high stresses in the material.

GB 2 111 769 shows an electric field control device for a termination or joint of a shielded high voltage cable. The electric field control device comprises an innermost stress grading layer having an at least partly resistive character and extending from the exposed conductor to overlap the or each cable shield, a conductive outer layer electrically contacting the stress grading layer at said overlap with the or each cable shield, and an insulating layer that separates the stress grading layer and the conductive layer in the region between said overlap and the exposed conductor. A number of different configurations of the stress grading layer, the insulation layer and the conductive layer are disclosed, it is stated that advantageously the stress grading layer, the conductive layer and the insulating layers are of uniform thickness throughout their lengths. In one embodiment the insulation layer forms a stress cone, having a uniform minimum thickness where it overlies the cable shield, a maximum thickness where it overlies the exposed conductor, and a tapering thickness in between.

The object of the present invention is to improve the control of the electric field, at dc voltage, in order to reduce the risk of harmful charges building up and of high stresses arising at rapid changes of the voltage.

This object is achieved according to the invention by a combination of resistive field control, comprising at least one resistive layer which is arranged along the cable and which, at one end (the first end), is electrically connected to an internal live conductor of the cable and, at its other end (the second end), is electrically connected to ground potential, and geometrical field control, comprising a stress cone extending with increasing diameter from a position between said second end of the resistive layer and one end of the conductive layer of the DC-cable, and at least partially towards said first end of the resistive layer.

By combining the resistive field control with a geometrical field control, a double control of the electric field is obtained, both at constant dc voltage and at varying voltage. Voltage variations may arise during connection and disconnection or at similar pulse stresses.

According to the prior art, the insulation screen of the cable is removed before mounting of a termination, a connection, a joint or the like cable device. The stress of the electric field is highest in regions where the cable has less resistance to electric breakdown than in other regions. One such region is, consequently, where the insulation screen of the cable is mechanically removed.

There are reasons to assume that the problems which jeopardize the mode of operation of the installation, in connection with dc voltage, are caused, inter alia, by the build-up of space charges in those boundary layers which exist between the insulation and the accessories. To solve these problems, prior art cable devices were complicated and of unreliable design, since they had to handle the electrical stresses caused by dc voltage, but also the high-voltage transient overvoltages which may occur. The prior art cable devices were expensive and also involved a long time of delivery, since they had to be adapted in situ to the geometry and electrical stresses of the cable.

By means of the present invention, the cable devices will be simple and reliable, since they are prefabricated with necessary components for control of the dc voltage field and control of the high-voltage transient overvoltages.

The invention will now be described in greater detail with reference to the accompanying drawings, wherein:
Figure 1 shows a schematic cross-section view of a cable connection,
Figure 2 shows a schematic cross-section view of a cable termination, and
Figure 3 shows a schematic cross-section view of a cable joint.

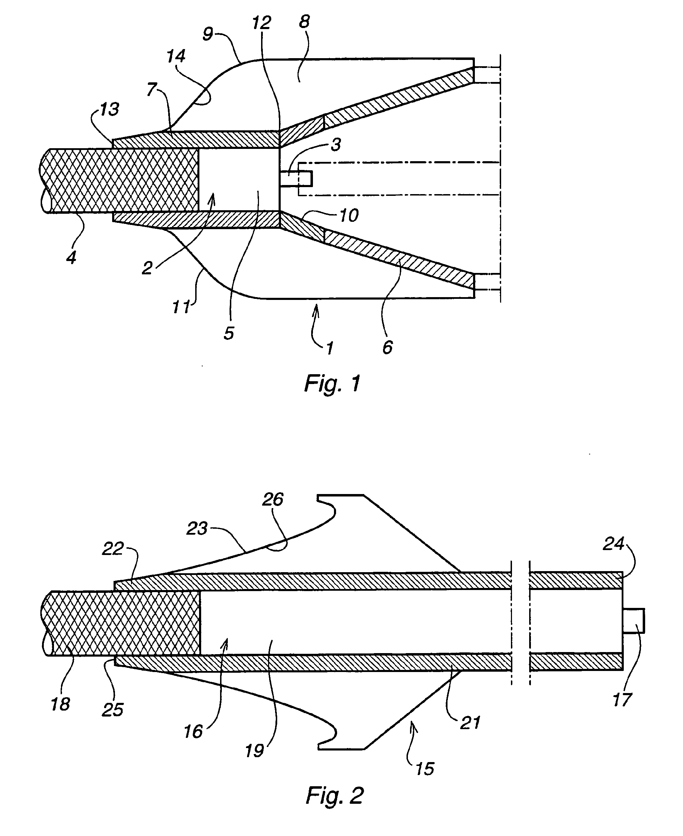

In the drawings, Figure 1 shows a cable connection 1 and a cable 2, with an inner conductor 3, an outer conductive layer 4, and an insulation 5. The connection 1 accommodates a resistive layer 7, an insulating layer 8, an outer conductive layer 9, and a deflector 10. Also the boundary surface towards a bushing (not shown) may be provided with a field-controlling resistive layer 6.

The outer conductive layer 9 is in the form of a stress cone 11, for geometrical field control. The resistive layer 7 extends through the connection 1 along the cable 2. The inner deflector 10 is electrically connected to the inner live conductor 3 of the cable 2 and to a first end 12 of the resistive layer 7. At a second end 13, the resistive layer 7 is electrically connected to ground potential, for example via the outer conductive layer 4 of the cable 2. Likewise, the stress cone 11 is electrically connected to ground potential and extends with increasing diameter from a region in the vicinity of the above-mentioned second end 13 at least partially towards the above-mentioned first end 12 of the resistive layer 7. The inner limiting surface 14 of the stress cone forms an angle with the resistive layer 7 of about 5-30°.

Figure 2 shows a cable termination 15 and a cable 16, with an inner conductor 17, an outer conductive layer 18 and an insulation 19. The termination 15 exhibits a resistive layer 21 and an outer conductive layer 22. The outer conductive layer 22 is formed as a stress cone 23 for geometrical field control. A first end 24 of the resistive layer 21 is electrically connected to the inner live part 17 of the cable 16. At a second end 25, the resistive layer 21 is electrically connected to ground potential and is in contact with the outer conductive layer 18 of the cable 16.

Likewise, the stress cone 23 is connected to ground potential and extends with increasing diameter from the above-mentioned second end 25 at least partially towards the above-mentioned first end 24. The inner limiting surface 26 of the stress cone forms an angle with the resistive layer 21 of about 5-30°.

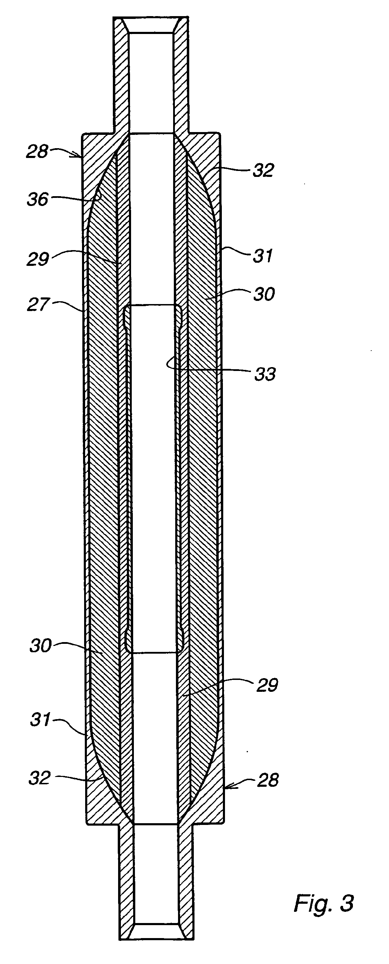

Figure 3 shows a cable joint 27, comprising a connecting portion 28 for the respective cable (not shown). Each connecting portion 28 exhibits a resistive field-controlling layer 29, an insulating layer 30 and an outer conductive layer 31. The outer conductive layer 31 is formed as a stress cone 32 for geometrical field control. At one end of the connecting portion 28, that is, usually in the centre of the joint 27, an inner deflector 33 is electrically connected to the resistive layer 29 and an inner live conductor of the cable (not shown), and at the other end of the connecting portion 28, the resistive layer 29 is electrically connected to ground potential. The deflector 33 exhibits a thickening of its end portions, which cooperate with the stress cone 32 at voltage variations. The stress cone 32 extends with increasing diameter from the second end of the resistive layer, which is nearest the ground potential, at least partially towards the above-mentioned first end of the resistive layer, which is nearest the live conductor. The inner limiting surface 36 of the stress cone 32 forms an angle with the resistive layer 29 of about 5-30°.

The joint 27 is suitably cylindrical, although other geometrical shapes are feasible, and is mainly made from EPDM rubber, but also other plastics or elastomers are possible.

## Claims

1. A prefabricated DC electric field control device for a high-voltage DC-cable (2, 16) comprising an inner live conductor (3, 17), an insulation (5, 19), and an outer conductive layer (4) arranged with one end ending at a distance from an end of the insulation thereby forming a region along the cable where the insulation is exposed, the field control device comprises a combination of resistive field control and geometrical field control, wherein the resistive field control comprises at least one resistive layer (7, 21, 29) arranged along the cable (2, 16) such that it extends along the conductive layer and beyond said one end of the conductive layer, which resistive layer at a first end (12, 24) is electrically connected to the conductor (3, 17) and at a second end (13, 25) is electrically connected to ground potential via the outer conductive layer (4), and the geometrical field control comprises a stress cone (11, 23, 32) comprising an outer conductive layer (9, 22), the stress cone is arranged at said second end (13, 25) of the resistive layer (7, 21, 29), **characterized in that** the stress cone (11, 23, 32) extends with increasing diameter from a position between said second end (13, 25) of the resistive layer (7, 21, 29), and said one end of the conductive layer (4, 18) of the DC-cable (2, 16), and at least partially towards said first end (12, 24) of the resistive layer (7, 21, 29).

2. A prefabricated DC electric field control device according to claim 1, **characterised in that** the inner limiting surface (14, 26, 36) of the stress cone (11, 23, 32) forms an angle with the resistive layer (7, 21 29) of about 5-30°.

## Patentansprüche

1. Vorgefertigte Gleichstrom-Feldsteuerungs-Vorrichtung für ein Hochspannungs-Gleichstrom-Kabel (2, 16), welches einen inneren stromführenden Leiter (3, 17), eine Isolierung (5, 19) und eine äußere leitende Schicht (4) aufweist, die so angeordnet ist, dass sie mit einem Ende entfernt von einem Ende der Isolierung endet, so dass sie einen Bereich entlang des Kabels bildet, in dem die Isolierung freiliegt, wobei die Feldsteuerungsvorrichtung eine Kombination aus Widerstands-Feldsteuerung und geometrischer Feldsteuerung umfasst, wobei die Widerstands-Feldsteuerung mindestens eine Widerstandsschicht (7, 21, 29) umfasst, die entlang des Kabels (2, 16) so angeordnet ist, dass sie sich entlang der leitenden Schicht erstreckt und über das eine Ende der leitenden Schicht hinaus, wobei die Widerstandsschicht an einem ersten Ende (12, 24) elektrisch mit dem Leiter (3, 17) verbunden ist und an einem zweiten Ende (13, 25) elektrisch mit dem Massepotential über die äußere leitende Schicht (4) verbunden ist, und wobei die geometrische Feldsteuerung einen Stresskonus (11, 23, 32) umfasst, der eine äußere leitende Schicht (9, 22) umfasst, wobei der Stresskonus an dem zweiten Ende (13, 25) der Widerstandsschicht (7, 21, 29) angeordnet ist,
**dadurch gekennzeichnet, dass** der Stresskonus (11, 23, 32) sich mit zunehmendem Durchmesser von einer Position zwischen dem zweiten Ende (13, 25) der Widerstandsschicht (7, 21, 29) und dem einen Ende der leitenden Schicht (4, 18) des Gleichstromkabels (2, 16) erstreckt, und zumindest teilweise in Richtung des ersten Endes (12, 24) der Widerstandsschicht (7, 21, 29).

2. Vorgefertigte Gleichstromfeldsteuerungsvorrichtung nach Anspruch 1, **dadurch gekennzeichnet, dass** die innere begrenzende Oberfläche (14, 26, 36) des Stresskonus (11, 23, 32) einen Winkel von etwa 5-30° mit der Widerstandsschicht (7, 21, 29) bildet.

## Revendications

1. Dispositif de commande de champ électrique continu préfabriqué pour un câble à courant continu à haute tension (2, 16) comprenant un conducteur (3, 17) interne sous tension, une isolation (5, 19) et une couche (4) conductrice extérieure disposée en ayant une extrémité se terminant à une certaine distance d'une extrémité de l'isolation pour ainsi former le long du câble une région dans laquelle l'isolation est exposée, le dispositif de commande de champ comprenant une combinaison d'une commande de champ résistive et d'une commande de champ géométrique, la commande de champ résistive comprenant au moins une couche résistive (7, 21, 29) disposée le long du câble (2, 16) de façon à ce qu'elle s'étende le long de la couche conductrice et au-delà de ladite une extrémité de la couche conductrice, laquelle couche résistive, à une premier extrémité (12, 24), est électriquement connectée au conducteur (3, 17) et, à une deuxième extrémité (13, 25), est électriquement connectée au potentiel de la masse par l'intermédiaire de la couche (4) conductrice extérieure, et la commande de champ géométrique comprend un cône (11, 23, 32) de contrainte comprenant une couche (9, 22) conductrice extérieure, le cône de contrainte étant disposé à la deuxième extrémité (13, 25) de la couche résistive (7, 21, 29), **caractérisé en ce que** le cône de contrainte (11, 23, 32) s'étend en ayant un diamètre croissant d'une position située entre la deuxième extrémité (13, 25) de la couche résistive (7, 21, 29) et ladite une extrémité de la couche conductrice (4, 18) du câble à courant continu (2, 16) et au moins partiellement vers la première extrémité (12, 24) de la couche résistive (7, 21, 29).

2. Dispositif de commande de champ électrique à courant continu préfabriqué suivant la revendication 1, **caractérisé en ce que** la surface de limitation intérieure (14, 26, 36) du cône de contrainte (13, 23, 32) fait avec la couche résistive (7, 21, 29) un angle d'environ 5-30°.
